# EUROPEAN PATENT SPECIFICATION

(11) **EP 1 396 752 B1**
(45) Date of publication and mention of the grant of the patent: **27.09.2006**
(21) Application number: 03255168.1
(22) Date of filing: 21.08.2003
(51) Int. Cl.: G02F 1/1335, G02B 5/124

(54) **Reflector for a reflective liquid crystal display device**
Reflektor für eine reflektierende Flüssigkristallanzeige
Réflecteur pour un affichage à cristaux liquides du type réfléchissant

(30) Priority: 23.08.2002 JP 2002243686
(43) Date of publication of application: 10.03.2004
(73) Proprietor: ALPS ELECTRIC CO., LTD., Ota-ku Tokyo 145 (JP)
(72) Inventor: Yoshii, Katsumasa, Tokyo 145 (JP)
(74) Representative: Kensett, John Hinton

(56) References cited:
- EP-A- 0 940 706
- EP-A- 1 174 735
- EP-A- 1 271 190
- WO-A-02/48760
- US-A- 5 961 198

## Description

### BACKGROUND OF THE INVENTION

### 1. Field of the Invention

The present invention relates to a reflector and a reflective liquid crystal display device provided with the reflector.

### 2. Description of the Related Art

Generally, among liquid crystal display devices, there are devices of the semi-transmissive type and of the transmissive type having a backlight, and devices of a reflective type. The reflective liquid crystal display device is a liquid crystal display device that utilizes only outside light such as sunlight and luminous light with no backlight, which is often used in a personal digital assistant required to have a low profile, light weight, and low power consumption, for example. In addition, the semi-transmissive liquid crystal display device is a device that turns on the backlight and operates in a transmissive mode under an environment where outside light cannot be obtained sufficiently, and operates in a reflective mode without turning on the backlight when outside light can be obtained sufficiently, which is often used in portable electronic devices such as a cellular phone and a notebook personal computer (notebook PC).

As the traditional reflective liquid crystal display device, a device is known where a specular reflector using an Al film is provided on the inner side or outer side of a liquid crystal cell of a reflective mode STN (Super-Twisted Nematic) system.

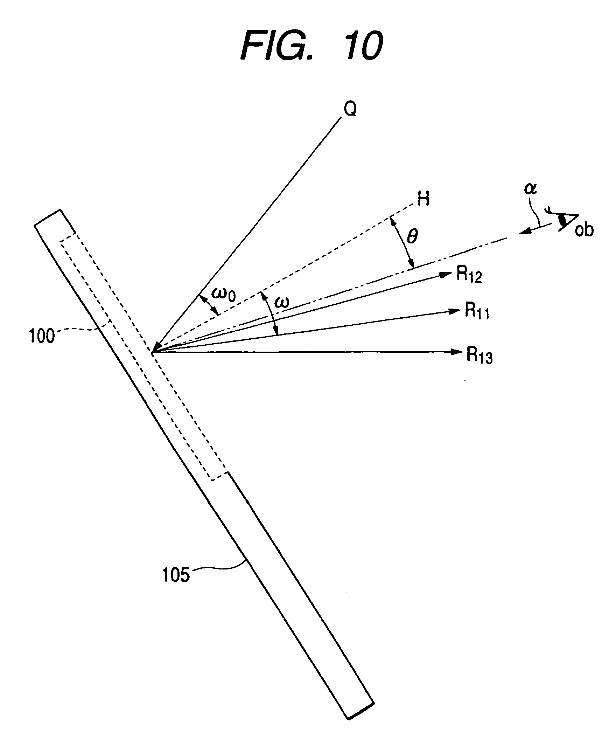

When the reflective liquid crystal display device described above is assembled in a device where a display surface is used obliquely, as in a personal digital assistant such as a cellular phone and a notebook PC, the device is generally seen from the directions close to a normal direction H to the liquid crystal display device in many cases, as shown in Fig. 10. More specifically, an angle **θ** which a main observation direction **α** of an observer (user) seeing a display surface (screen) forms with the normal direction H often ranges from angles of 0 to 20 degrees.

Fig. 10 is an explanatory diagram illustrating a state where a cellular phone is used in which a display part 100 formed of the reflective liquid crystal display device is provided in a main body 105. In Fig. 10, H is the normal to the liquid crystal display device provided in the display part 100, Q is the incident light, and **ω**₀ is the angle of incidence (30 degrees, for example). Additionally, R₁₁ is the reflected light (specular reflection) where the incident angle **ω**₀ is equal to a reflection angle ω, R₁₂ is the reflected light where the reflection angle **ω** is smaller than the incident angle **ω**₀, and R₁₃ is the reflected light where the reflection angle **ω** is greater than the incident angle **ω**₀.

As apparent from the drawing, an observer's viewpoint ob generally corresponds to the direction of the reflected light R₁₂ close to the normal direction H, more specifically, to the direction ranging from the normal direction H to an angle of 10 degrees. On the other hand, the reflected lights R₁₁ and R₁₃ are hard to see because they are in the direction where the display surface is seen from below. Therefore, considering the convenience of the use of the observer, it is desired to secure a wide viewing angle as well as to increase the reflectance in the direction of a smaller reflection angle than the specular reflection.

However, in the conventional reflective liquid crystal display device provided with the specular reflector using the Al film, almost all of the incident light is reflected in the direction of specular reflection and the neighbouring directions (the peak of the reflectance is at an angle of specular reflection and neighbouring angles of the specular reflection). Thus, the display seen from the direction of specular reflection and the neighbouring directions is seen bright but the display seen from the other directions is seen dark.

Therefore, when the display surface of the cellular phone having the conventional reflective display device provided in the display part is seen, the observer's viewpoint generally gathers light in the directions close to the normal direction H as described above. Thus, the display is dark, and the observer has to see the display from the direction of specular reflection and the neighbouring directions when trying to see bright display, which is hard to see because the observer looks up the display surface from below.

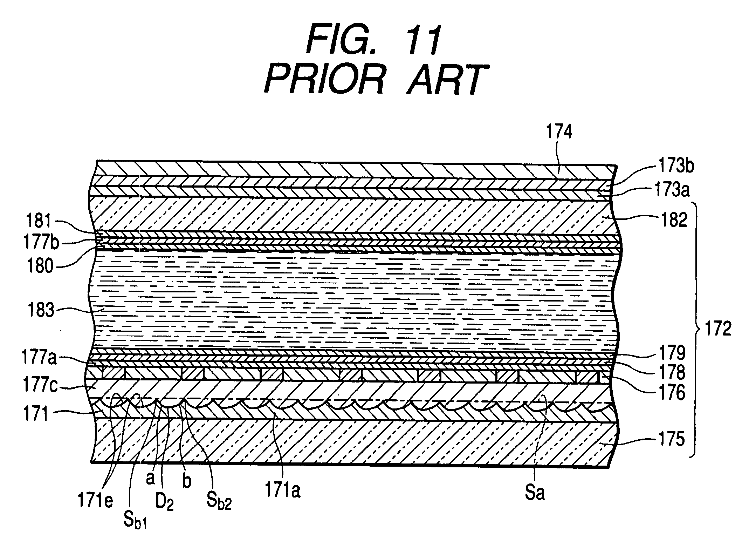

Then, in order to improve such the problem, a reflective liquid crystal display device shown in Fig. 11 is considered.

The reflective liquid crystal display device has the schematic configuration in which a first retardation plate 173a, a second retardation plate 173b and a polarizing plate 174 are sequentially layered on an upper glass substrate 182 on a liquid crystal cell 172 of a reflective mode STN (Super-Twisted Nematic) system.

The liquid crystal cell 172 has the schematic configuration in which a lower glass substrate 175, a reflector 171, an overcoat layer 177c, a color filter 176, an overcoat layer 177a, a lower transparent electrode layer 178, a lower alignment layer 179, an upper alignment layer 180 facing the lower alignment layer 179 with space, a top coat layer 177b, an upper transparent electrode layer 181 and the upper glass substrate 182 are sequentially layered.

In the reflector 171, a plurality of concave parts 171e is formed irregularly and adjacently on a surface (reference plane) Sa of a flat plate shaped base material 171a made of aluminium.

The form of the inner surface in the specified longitudinal section of the concave part 171e is formed of a first curve a from one peripheral part S_{b1} to a deepest point D₂ of the concave part 171e, and a second curve b from the deepest point D₂ to an other peripheral part S_{b2} of the concave part continuously from the first curve a. The first and second curves a and b have a tilt angle of zero degree to the base material surface Sa at a deepest point D₂, joining each other. The size of the curvature radius of the first curve a is set smaller than the curvature radius of the second curve b.

In such a reflective liquid crystal display device, the thickness of the base material 171a is reduced to allow the device to be used as a semi-transparent reflective liquid crystal display device in which the light emitted from under the liquid crystal cell 172 is transmissive through the base material 171a. In this case, a backlight is provided on the under side of the liquid crystal cell 172 as a light source. A prior art reflector comprising a plurality of reflective concave parts is also known from EP 1174735, which discloses the features recited in the preamble of claim 1. The reflector of EP 1174735 has concave parts formed of two spherical surfaces.

### SUMMARY OF THE INVENTION

However, in the reflective liquid crystal display device provided with the reflector 171 described above, the reflectance in the directions of smaller reflection angles than the specular reflection angle (the directions closer to the normal direction than the specular reflection angle) can be increased more slightly than in the device provided with the specular reflector using the Al film, but there is an increasing demand in recent years to obtain brighter display and to further improve display properties. It is difficult to realize the demand by the reflective liquid crystal display device shown in Fig. 11.

The invention has been made to solve the problems. One object is to provide a reflector having viewing angle properties such that when the reflected light of the light having entered the reflector is observed from the direction close to the normal direction to the reflector, it is seen brighter than from the other viewing angles.

In addition, one object of the invention is to provide a reflective liquid crystal display device having viewing angle properties such that, when display is observed from the direction close to the normal direction to the reflective liquid crystal display device, it is seen brighter than from the other viewing angles.

According to an aspect of the present invention there is provided:

A reflector as recited in the appended claim 1.

According to the reflector in this configuration, the curvature radii of the first to third curves, the position of the plane, the tilt angle of the first straight line, and the pitch and depth of the plurality of the concave parts are chosen so that the reflector can easily have viewing angle properties such that it can be seen brighter than from other viewing angles, when observed from the direction close to the normal direction to the reflector.

In the reflector of the invention, each of the plurality of the concave parts is preferably formed so as to align a longitudinal section passing through the deepest point of each concave part in the same direction, and to orient the first straight line in a single direction.

In the reflector of the invention, it is acceptable that the planar surface in each concave part has a rectangular contour or an arc contour in plan. It is fine that the plane is formed inside the concave part so as to be symmetric with respect to a line passing through the specified longitudinal section. In addition, it is acceptable that the plane is formed inside the concave part so as to be non-symmetric with respect to a line passing through the specified longitudinal section. In the reflector of the invention, concave parts having the plane symmetric with respect to the line passing through the specified longitudinal section and concave parts having the plane non-symmetric with respect to the line passing through the specified longitudinal section can be mixed.

In the reflector of the invention, it is acceptable that the depth of the concave part is formed irregularly in the range of 0.1 to 3 µm, and the pitch between the adjacent concave parts is disposed irregularly in the range of 2 to 50 µm in the plurality of the concave parts.

Additionally, in the reflector of the invention, the reflector preferably has a reflectance distribution asymmetric with respect to a specular reflection angle of incident light, and also has a non-Gaussian distribution type reflectance property, whereby the maximum value of the reflectance is in the range of a reflection angle smaller than the specular reflection angle of the incident light, obtained by choosing the curvature radii of the first to third curves, the position of the plane, the tilt angle of the first straight line, and the pitch and depth of the plurality of the concave parts.

According to the reflector in the configuration, the reflectance in the range of a specific angle within the reflection angle smaller than the direct reflection angle is increased. The reflector having high luminance can be obtained particularly at angles of 0 to 20 degrees which the normal direction of the reflector forms with the main observation direction. When such a reflector is provided in a liquid crystal display device, bright display (screen) can be obtained, and a reflective liquid crystal display device excellent in display properties can be realized.

Furthermore, preferably, a profile of a graph illustrating the reflectance distribution of the reflector is stepped, and the maximum value of the reflectance is at the top part of the stepped profile. According to the reflector showing such a reflectance distribution, since the reflectance in the range of the specific angle within the reflection angle smaller than the direct reflection angle is further increased, an amount of the reflected light is further increased in the distribution in the directions close to the observer's viewpoint. The reflector having higher luminance can be obtained particularly at angles of 0 to 20 degrees which the normal direction of the reflector forms with the main observation direction.

When the reflector of the invention is formed of a base material and a metal film having a plurality of concave parts on the surface, the thickness of the metal film is set in the range of 8 to 20 nm. Thus, the thickness of the metal film is thinner, the light translucency of light from a backlight disposed under the reflector can be enhanced, and the device can be used as a semi-transparent reflective liquid crystal display device exerting excellent properties in the both cases of reflecting light and transmitting light.

Moreover, when the reflector of the invention is formed of a base material having a plurality of concave parts on the surface, the thickness of the base material is set in the range of 8 to 20 nm. Thus, the thickness of the base material is formed thin, and the device can be used as a semi-transparent reflective liquid crystal display device exerting excellent properties as similar to the case where the thickness of the metal film is set in the range of 8 to 20 nm.

The invention further provides a reflective liquid crystal display device as per Claim 9.

According to the reflective liquid crystal display device in the configuration, when the display is observed from the direction close to the normal direction to the reflective liquid crystal display device, the device can have viewing angle properties such that the display is seen brighter than seen from the other viewing angles. Furthermore, when the reflector showing the non-Gaussian distribution type reflectance properties described above is provided, an amount of the reflected light is increased in the distribution in the directions close to the observer's viewpoint, and a bright display (screen) can be obtained particularly at angles of 0 to 20 degrees which the normal direction to the liquid crystal display device forms with the main observation direction, allowing a liquid crystal display device excellent in display performance to be realized.

As described above, the reflector according to the invention can show viewing angle properties such that, when the reflected light having entered the reflector is observed from the direction close to the normal direction to the reflector, it can be seen brighter than from the other viewing angles.

Furthermore, the reflective liquid crystal display device of the invention can show viewing angle properties such that, when the display is seen from the direction close to the normal direction to the device, it can be seen brighter than seen from the other viewing angles.

Embodiments of the invention will now be described, by way of example only, with reference to the accompanying drawings, in which:
Fig. 1 is a diagram illustrating the structure of partial cross section of a reflective liquid crystal display device of a first embodiment according to the invention;
Fig. 2 is a plan view illustrating one concave part of a reflector provided in the reflective liquid crystal display device shown in Fig. 1;
Fig. 3 is a diagram illustrating a specified longitudinal section of the concave part shown in Fig. 2;
Fig. 4 is a cross section schematically illustrating the effect of one concave part of the reflector provided in the reflective liquid crystal display device shown in Fig. 1;
Fig. 5 is a graph illustrating the relationship between the acceptance angle and the reflectance of the reflector of the embodiment according to the invention and the conventional reflector;
Fig. 6 is a plan view illustrating another example of one concave part of the reflector according to the invention;
Fig. 7 is a plan view illustrating still another example of one concave part of the reflector according to the invention;
Fig. 8 is a plan view illustrating one concave part of a reflector provided in a reflective liquid crystal display device of not forming part of the invention;
Fig. 9 is a diagram illustrating a specified longitudinal section of the concave part shown in Fig. 8;
Fig. 10 is an explanatory diagram illustrating a liquid crystal display device provided in a cellular phone; and
Fig. 11 is a cross section illustrating the schematic configuration of the conventional reflective liquid crystal display device.

### DESCRIPTION OF THE PREFERRED EMBODIMENT

Hereafter, embodiments of the invention will be described with reference to the drawings, but the invention will not be defined by the embodiments below.

### First Embodiment

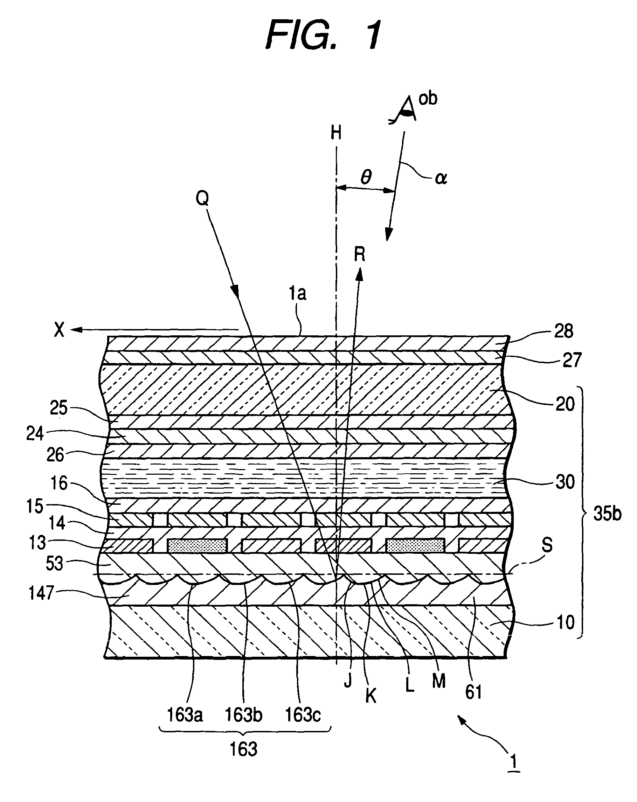

Fig. 1 is a diagram schematically illustrating the structure of partial cross section of a reflective liquid crystal display device of a first embodiment according to the invention.

In Fig. 1, a reflective liquid crystal display device 1 is configured in which a first substrate (one of substrates) 10 and a second substrate (the other of the substrates) 20, both made of transparent glass facing each other as sandwich a liquid crystal layer 30, are bonded in one piece with a sealing material disposed in a ring shape in the periphery of the substrates 10 and 20.

On the liquid crystal layer 30 side of the first substrate 10, a reflector 147, a transparent interposing layer 53, a color filter 13 for color display, an overcoat film (transparent planarization layer) 14 for planarizing bumps and dips due to the color filter 13, a transparent electrode layer 15 for driving the liquid crystal layer 30, and an alignment layer 16 for controlling the alignment of liquid crystal molecules forming the liquid crystal layer 30 are sequentially layered. In addition, on the liquid crystal layer 30 side of the second substrate 20, a transparent electrode layer 25, an overcoat film 24, and an alignment layer 26 are sequentially layered. Furthermore, the transparent electrode layer 15 and the transparent electrode layer 25 are arranged so as to face perpendicularly each other seen in plan, and the reflective liquid crystal display device 1 is formed to be a passive matrix type.

A liquid crystal cell 35b is configured of the first substrate 10, the second substrate 20, and each of component members disposed between the substrates.

On the opposite side of the liquid crystal layer 30 of the second substrate 20 (the outer surface side of the second substrate 20), a retardation plate 27 and a polarizing plate 28 are layered in this order. The outer side of the polarizing plate 28 is a display surface 1a.

In the reflector 147 provided in the reflective liquid crystal display device 1, concave parts 163a, 163b, 163c and so on (generally called concave parts 163) having light reflectivity are formed irregularly and adjacently on a surface (reference plane) S of a flat plate shaped base material 61 made of aluminium, for example, thereby disposing fine bumps and dips on the surface. The reference plane S of the base material 61 is a plane in parallel with the substrate 10, and a plane including the top parts of the bumps among the fine bumps and dips formed on the surface of the base material 61.

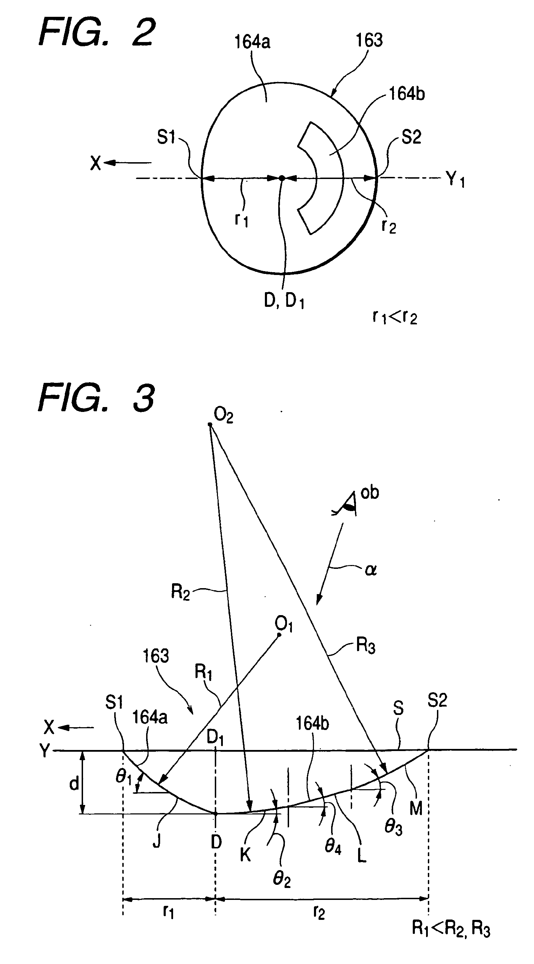

In each of the concave parts 163, the inner surface is formed of a peripheral curved surface 164a, which is part of an aspheric surface in a nearly spoon shape, and of a plane 164b surrounded by the peripheral curved surface 164a; Fig. 2 depicts a plane view and Fig. 3 depicts a diagram of a specified longitudinal section. As shown in Fig. 2, the plane 164b has an arc shape seen in plane.

Each of the plurality of the concave parts 163 has a specified longitudinal section Y passing through the deepest point D of the concave part 163. As shown in Fig. 3, in the specified longitudinal section Y, the inner surface is formed of a first curve J extending from one peripheral part S1 to the deepest point D of the concave part 163, a second curve K from the deepest point D to a first straight line L of the concave part 163 continuously to the first curve J, the first straight line L to a third curve M continuously to the second curve K, and the third curve M to an other peripheral part S2 continuously to the first straight line L. The specified longitudinal section Y of the peripheral curved surface 164a has the first curve J, the second curve K, and the third curve M and the first straight line L. Both of the first curve J and the second curve K have a tilt angle of zero degree to the base material surface S at the deepest point D, joining each other.

As shown in Fig. 2, the arc-shaped plane 164b is formed symmetrically with respect to a line (the line along the specified longitudinal section Y) Y₁ passing through the specified longitudinal section Y.

In addition, each of the plurality of the concave parts 163 is formed so as to align the specified longitudinal section Y in the same direction, and to orient the first straight line L in a single direction. In the embodiment, the first straight line L of each of them is formed so as to align on the side in the direction closer to the observer's viewpoint ob (the direction opposite to a direction X apart from the observer's viewpoint ob, that is, the direction on the right side of Figs. 1 and 3). Furthermore, the first curve J of each of them is formed so as to align in the direction X apart from the observer's viewpoint ob. Moreover, the direction on the left side of Figs. 1 and 3 is the light incident side.

A curvature radius R₂ of the second curve K is formed greater than a curvature radius R₁ of the first curve J. In addition, the curvature radius R₂ of the second curve K is equal to a curvature radius R₃ of the third curve M. Furthermore, the curvature radius of the first curve J changes in the range of 4 µm ≤ R₁ ≤ 120 µm, and the curvature radius of the second curve K changes in the range of 5 µm ≤ R₂ ≤ 140 µm. Moreover, in Fig. 3, **θ**₁ is the tilt angle of the first curve J, changing in the range of -80° ≤ **θ**₁ ≤ 0°. **θ**₂ is the tilt angle of the second curve K, changing in the range of 0° ≤ **θ**₂ ≤ 3°. **θ**₃ is the tilt angle of the third curve M, changing in the range of 20° ≤ **θ**₃ ≤ 35°. **θ**₄ is the tilt angle of the plane 164b, in other words, it is the tilt angle of the first straight line L, changing in the range of 3° ≤ **θ**₄ ≤ 20°.

Additionally, when the concave part 163 is seen from the plane direction, a distance r₁ between a normal D₁ at the deepest point D and the peripheral part S1 is smaller than a distance r₂ between the normal D₁ at the deepest point D and the peripheral part S2.

The distances r₁ and r₂ are determined in accordance with the curvature radii R₁, R₂ and R₃ and the tilt angles **θ**₁ to **θ**₄.

Since a depth d of the concave part 163 takes a random (irregular) value at every concave part in the range of 0.1 to 3 µm, moiré patterns are not generated when the reflector 147 is assembled in the reflective liquid crystal display device. Furthermore, a peak concentration of an amount of the reflected light at a particular viewing angle is relaxed, and changes in the amount of the reflected light within sight can be smoothened. The reason is that the reflectance of the specular reflection angle becomes too high when the depth of the concave part 163 is below 0.1 µm.

A pitch between the adjacent concave parts 163 takes a random (irregular) value in the range of 2 to 50 µm. This is because there is a problem that light interference color emerges to tint the reflected light when the pitch between the adjacent concave parts 163 supposedly has regularity. Moreover, when the pitch between the adjacent concave parts 163 is below 2 µm, limitations are imposed in fabricating the concave parts of the reflector, significantly prolonging the processing time.

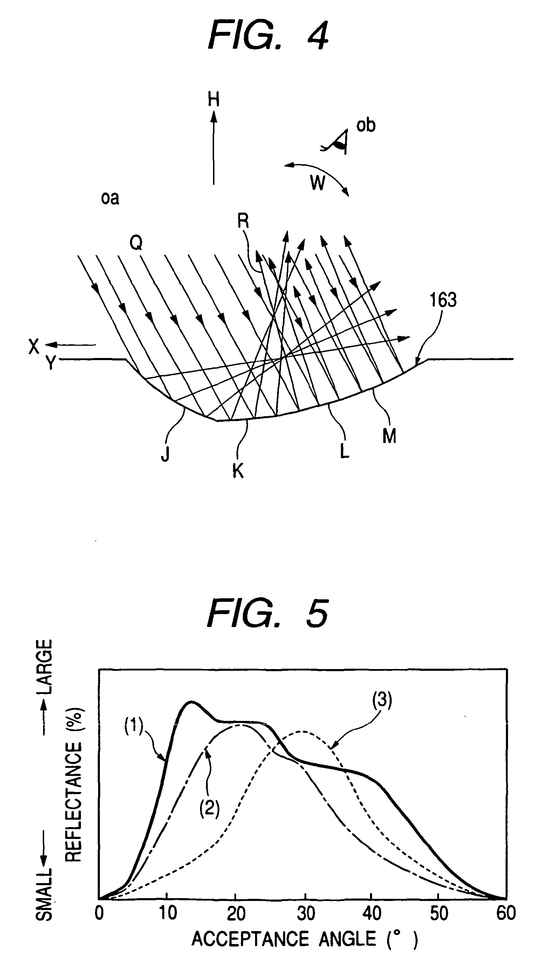

As shown in Fig. 4, when the reflective liquid crystal display device is observed, the observer's viewpoint ob gathers light in the direction close to the general normal direction H, more specifically, a range W of the normal direction H to an angle of 20 degrees. Therefore, in the embodiment, the plurality of the concave parts 163 having the configuration above is disposed on the surface of the reflector 147 so as to concentrate more light in the range W. When this is done, outside light (incident light) Q enters the concave part 163 of the reflector 147 from various direction, and is reflected in various directions on the inner surface of the concave part 163 in accordance with the tilt angles of the incident points. Thus, reflected light R diffuse in the range of a wide viewing angle as a whole, but the reflector is designed to gather more light in the range W in the embodiment. Therefore, when the liquid crystal display device is observed from the direction close to the normal direction H of the device, it can be seen brighter than from the other directions.

More specifically, in the reflector 147 of the embodiment, the inner surface of each of the concave part 163 is formed of the peripheral curved surface 164a, which is part of an aspheric surface, and the plane 164b surrounded by the peripheral curved surface 164a, and the first curve J of each of them is formed so as to align in the direction apart from the observer's viewpoint ob. Therefore, the reflectance properties are shifted from the direction of specular reflection to the base material surface S. That is, incident light Q coming from a direction oa is reflected as light R, such that a bright display area is shifted in the normal direction H to the base material surface S more than in the direction of specular reflection. Additionally, in the reflector 147 of the embodiment, the second curve K, the first straight line L and the third curve M are aligned in the direction opposite to the first curve J, that is, on the side in the direction close to the observer's viewpoint ob. Thus, as regards the overall reflectance properties in the specified longitudinal section Y, the reflectance in the direction reflected by the surfaces around the second curve K and the third curve M is increased, and the reflectance in the direction reflected by the surface around the first straight line L is also increased.

Therefore, the reflectance properties that the reflected light is properly gathered in a particular direction can be formed.

Fig. 5 shows the relationship between the acceptance angle α and the brightness (reflectance) when incident light Q is irradiated onto the reflector 147 of the first embodiment at an incidence angle of 30° (an angle which the perpendicular (normal) H on the reflector 147 forms with the optical axis of the outside light Q irradiated from the opposite side of the observer's viewpoint ob that is observing the display from one side of the perpendicular H) and the observation direction **α** (acceptance angle) is varied from the position of the normal (acceptance angle of 0°) to an angle of 60°. In Fig. 5, a solid line (1) shows the relationship between the acceptance angle and the reflectance of the reflector 147 of the first embodiment.

In Fig. 5, the relationship between the acceptance angle and the reflectance of the reflector 171 shown in Fig. 11, which is used before, is depicted by an alternate long and short dash line (2) as Comparative example 1, and the relationship between the acceptance angle and the reflectance of the specular reflector using the conventional Al film is depicted by a dashed line (3) as Comparative example 2.

As apparent from Fig. 5, in the specular reflector of Comparative example 2, the peak of the reflectance is at an acceptance angle of 30° of the direct reflection angle. When the acceptance angle is smaller than an angle of 20°, the reflectance is reduced significantly. Therefore, it is considered that the display seen from the direction of direct reflection is seen bright, whereas the display seen from the other directions is seen dark. Comparative example 2 shows the reflectance is higher than that of Comparative example 1 in the acceptance angles from 0 to 30 degrees, because the peak of the reflectance ranges below an angle of 30 degrees of the specular reflection angle in the reflector of Comparative example 1.

Correspondingly, in the reflector 147 of the embodiment, a profile of the graph illustrating the reflectance distribution is stepped, and has non-Gaussian distribution type reflectance properties showing asymmetry to the direct reflection angle of incident light. Additionally, the maximum value of reflectance is around an acceptance angle of about 15° in the range of a reflection angle (in the range of the acceptance angle) smaller than the direct reflection angle (acceptance angle of 30°) of incident light. The maximum value of the reflectance is at the top part of the stepped profile. Furthermore, in the reflector 147 of the embodiment, the reflectance in the range of acceptance angles 0 to about 25° is higher than that of Comparative examples 1 and 2. Therefore, the display can be seen bright in the reflective liquid crystal display device 1 provided with the reflector 147 of the embodiment than in the reflective liquid crystal display device provided with the reflector of Comparative example 1 or Comparative example 2, when the display is observed from the direction close to the normal direction particularly in the practical viewpoint.

Moreover, when the outside light Q enters the reflector 147 of the embodiment from the direction on the left side of Fig. 1 or 3 at an incident angle of 30 degrees, the reflectance at reflection angles greater than a direct reflection angle of 30 degrees is most increased, and the neighboring reflectance is also increased as the peak is in that direction.

The curvature radius R₁ of the first curve J, the curvature radius R₂ of the second curve K, the position of the plane 164b, the tilt angle **θ**₄ of the first straight line L, and the pitch and the depth d of the plurality of the concave parts 163 can be changed to vary the profile of the graph illustrating the reflectance distribution of the reflector 147, thereby allowing the reflector 147 of the embodiment to have desired reflectance properties. Therefore, when observed from the direction close to the normal direction H to the reflector 147, the reflector can be easily controlled to have viewing angle properties that can be seen brighter than seen from the other viewing angles.

Additionally, according to the reflective liquid crystal display device 1 of the embodiment, since it is provided with the reflector 147 of the embodiment, an amount of the reflected light is increased in the distribution in the directions close to the observer's viewpoint ob, bright display (screen) can be obtained particularly at the angle θ of 0 to 20 degrees which the normal direction H to the liquid crystal display device forms with the main observation direction α in the practical viewpoint, and a liquid crystal display device excellent in display performance can be realized. On account of this, when the reflective liquid crystal display device of the embodiment is assembled in the display part of portable electronic devices such as a cellular phone and a notebook PC, visibility is particularly excellent.

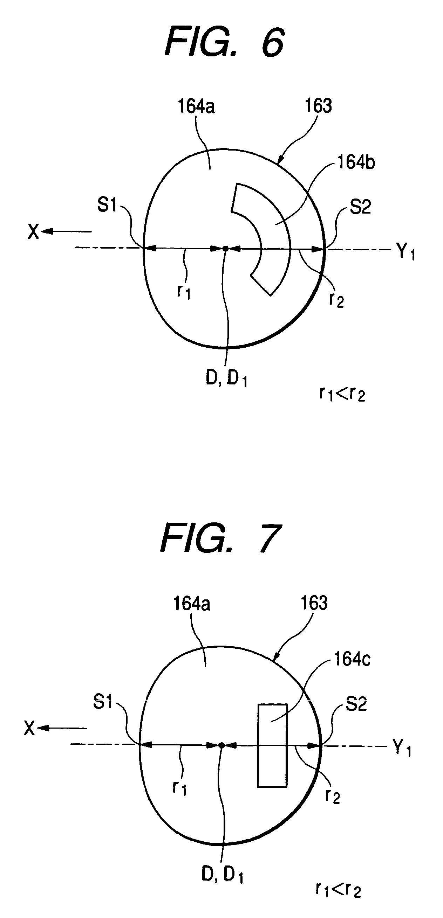

Furthermore, in the reflective liquid crystal display device of the first embodiment, the case is described in which the plane 164b being a part of the inner surface of each of the concave parts 163 formed in the reflector 147 is formed symmetrically with respect to the axis Y₁ passing through the specified longitudinal section Y. However, it is acceptable that the plane 164b is formed in the concave part 163 so as to be non-symmetric to the line Y₁ passing through the specified longitudinal section Y as shown in Fig. 6. Moreover, as the plurality of the concave parts 163 formed on the surface of the reflector 147, it is acceptable that concave parts having the plane 164b symmetric with respect to the line Y₁ passing through the specified longitudinal section Y as shown in Fig. 2, and concave parts having the plane 164b non-symmetric with respect to the line Y₁ passing through the specified longitudinal section Y as shown in Fig. 6 are mixed.

In the reflective liquid crystal display device of the first embodiment, the case is described in which the plane 164b being a part of the inner surface of each of the concave parts 163 formed in the reflector 147 has an arc contour seen in plane. However, a plane 164c having a rectangular contour seen in plane as shown in Fig. 7 is acceptable instead of the plane 164b having an arc contour. It is acceptable that the plane 164c is formed in the concave part 163 so as to be symmetric or non-symmetric with respect to the line Y₁ passing through the specified longitudinal section Y. Additionally, as the plurality of the concave parts 163 formed on the surface of the reflector 147, it is acceptable that concave parts having the plane 164c symmetric to the line Y₁ passing through the specified longitudinal section Y, and concave parts having the plane 164c non-symmetric to the line Y₁ passing through the specified longitudinal section Y are mixed. Furthermore, as the plurality of the concave parts 163 formed on the surface of the reflector 147, it is acceptable that concave parts having the plane 164b of an arc shape seen in plan and concave parts having the plane 164c of a rectangular shape seen in plan are mixed.

### Example

Next, a reflective liquid crystal display device of a second example not forming part of the invention will be described.

The difference of the reflective liquid crystal display device of this example with respect to the reflective liquid crystal display device 1 of the first embodiment 1 shown in Fig. 1 is in that the form of the plurality of the concave parts formed on the surface of the flat plate shaped base material 61 of the reflector disposed in the liquid crystal cell 35b is different.

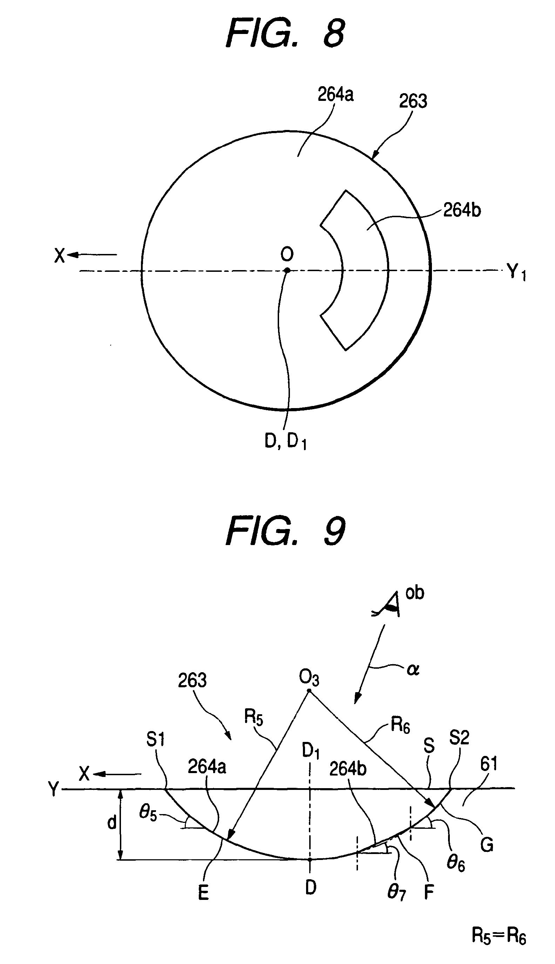

Fig. 8 is a plan view of a concave part 263 formed on the surface of a reflector provided in the reflective liquid crystal display device of this example, and Fig. 9 is a diagram of specified longitudinal section of the concave part 263.

As shown in Figs. 8 and 9, the inner surface of each of the concave parts 263 is formed of a peripheral curved surface 264a, being part of a spherical surface, and a plane 264b surrounded by the peripheral curved surface 264a. As shown in Fig. 8, the plane 264b has an arc contour seen in plane.

Each of the plurality of the concave parts 263 has a specified longitudinal section Y passing through a deepest point D of the concave part 263. As shown in Fig. 8, in the specified longitudinal section Y, the form of the inner surface is formed of a first curve E from one peripheral part S1 of the concave part 263 through the deepest point D to a first straight line F, the first straight line F to a second curve G continuously to the first curve E, and the second curve G to an other peripheral part S2 continuously to the first straight line F. The specified longitudinal section Y of the peripheral curved surface 264a has the first curve E and the second curve G. The specified longitudinal section Y of the plane 264b has the first straight line F. The first curve E has a tilt angle of zero degree to a base material surface S at the deepest point D.

As shown in Fig. 8, the arc-shaped plane 264b is formed symmetrically with respect to a line (a line along the specified longitudinal section Y) Y₁ passing through the specified longitudinal section Y.

Additionally, when the reflector provided in the reflective liquid crystal display device of the second embodiment is seen in the plane direction as shown in Fig. 8, a center O of the concave part 263 in the plane direction is matched with the position of the deepest point D.

Furthermore, each of the plurality of the concave parts 263 is formed so as to align the specified longitudinal section Y in the same direction, and to orient the first straight line F in a single direction. In the embodiment, the first straight line F of each of them is formed so as to align in the direction close to the observer's viewpoint ob (the direction opposite to a direction X apart from the observer's viewpoint ob, that is, the direction on the right side of Figs. 1 and 9). Moreover, the first curve E of each of them is formed so as to align in the direction X apart from the observer's viewpoint ob. In addition, the direction on the left side of Figs. 1 and 9 is the light incident side.

A curvature radius R₅ of the first curve E is equal to a curvature radius R₆ of the second curve G. Furthermore, a curvature radius of the first curve E is in the range of 5 µm ≤ R₅ ≤ 14 0 µm.

Moreover, in Fig. 9, **θ**₅ is the tilt angle of the first curve E, changing in the range of -35° ≤ **θ**₅ ≤ 3°, and **θ**₆ is the tilt angle of the second curve G, changing in the range of 20° ≤ **θ**₆ ≤ 35°. Thus, the tilt angle distribution of the peripheral curved surface 264a is to be set in the range of -35 to +35 degrees. The reason is that the diffusion angle of the reflected light is spread too much, the reflection intensity is reduced, and bright display cannot be obtained when the tilt angle distribution of the peripheral curved surface 264a is out of the range of -35 to +35 degrees (it is because the diffusion angle of the reflected light becomes an angle of 36 degrees or above in the air, the reflection intensity peak inside the liquid crystal display device is reduced, and the loss in the total reflection is large). Additionally, in Fig. 9, **θ**₇ is the tilt angle of the plane 264b, in other words, the tilt angle of the first straight line F, changing in the range of 3° ≤ **θ**₇ ≤ 20°.

A depth d of the concave part 263 takes a random (irregular) value at every concave part in the range of 0.1 to 3 µm from the same reason as the first embodiment.

The pitch between the adjacent concave parts 263 takes a random (irregular) value in the range of 2 to 50 µm from the same reason as the first embodiment.

According to the reflector provided in the reflective liquid crystal display device of this example not forming part of the invention, the curvature radii of the first and second curves (the tilt angle distribution of the peripheral curved surface 264b), the position of the plane 264b, the tilt angle **θ**₇ of the first straight line F, and the pitch and the depth of d the plurality of the concave parts 263 can be chosen so that, when observed from the direction close to the normal direction to the reflector, the reflector has viewing angle properties, such that the display is seen brighter than from the other viewing angles.

Furthermore, in the first embodiment of the invention and in the example not forming part of the invention, the reflector 147 is formed separately from the electrode layer 15. However, when the electrode layer 15 itself is formed of the reflector 147 and the electrode layer 15 is formed at the position of the reflector 147, a transparent electrode layer can also serve as the reflector and the layer configuration of the reflective liquid crystal display device is simplified. Moreover, the case is described in which a single retardation plate is disposed between the second substrate 20 and the polarizing plate 28, but the retardation plate can be disposed in plurals.

Additionally, in the embodiments, the liquid crystal display device having the reflector inside is described in which the reflector 147 for reflecting the light having entered from outside is incorporated between the substrate 10 and the substrate 20. However, the liquid crystal display device having the reflector outside can be formed in which the reflector 147 is disposed outside the two substrates sandwiching the liquid crystal layer.

Furthermore, in the embodiments, the case is described in which the reflector 147 has the plurality of the concave parts 163 on the surface of the base material 61, which has light reflectivity. However, as the reflector, it is acceptable to form the plurality of the concave parts 163 of the configuration above on the surface of a metal film formed on the base material. In this case, organic films such as acrylic resist can be used as the base material, and metal films formed of metals having high reflectance such as Al and Ag can be used as the metal material.

Moreover, in the embodiments, the case is described in which the invention is adapted to a reflective liquid crystal display device, but it can also be adapted to a semi-transparent reflective liquid crystal display device. In this case, the thickness of the base material 61 of the reflector 147 is set in the range of 8 to 20 nm (80 to 200 angstroms). Alternatively, when the reflector is formed of the base material and the metal film formed with a plurality of concave parts on the surface, it is fine that the thickness of the metal film is set in the range of 80 to 200 nm (800 to 2000 angstroms), fine openings are formed in the metal film, and a backlight as a light source for transmissive display is disposed on the outer surface side of the first substrate 10. In this case, it is fine to dispose a second polarizing plate between the backlight and the liquid crystal panel 35b.

In addition, in the embodiments, the case is described in which the reflective liquid crystal display device of the invention is applied to a passive matrix liquid crystal display device, but the invention can also be applied to an active matrix liquid crystal display device. In this case, it is fine that the reflector 147 described above is disposed above or under pixel electrodes forming pixels, for example.

## Claims

1. A reflector comprising a flat planar base material (61), a plurality of reflective concave parts (163) formed on a surface of the flat planar base material (61) or on a metal film formed on the base material, wherein
each reflective concave part is formed of a first peripheral curved surface (164a) surrounding and joined to a second surface (164b),
each concave part has a deepest point (D),
and wherein a cross-section (Y) passing through said deepest point (D) is formed of a first curve (J) extending from a peripheral part (S1) of the concave part to the deepest point (D) thereof, **characterised in that**: in each concave part (163) the first surface (164a) is aspherical and the second surface (164b) is planar, and wherein the cross-section (Y) further comprises a second curve (K) extendingfrom the deepest point (D) of the concave part to one extreme of a first straight line segment (L), the first straight line segment (L) extends to a third curve (M), and the third curve (M) extends from the other extreme of the straight line segment (L) to another peripheral part (S2)of the concave part,
and wherein a radius of curvature (R₂) of the second curve (K) is greater than a radius of curvature (R₁) of the first curve (J), and the radius of curvature (R₂) of the second curve (K) is equal to a radius of curvature (R₃) of the third curve (M).

2. The reflector according to claim 1, wherein the second plane surface has a rectangular or arcuate contour.

3. The reflector according to claim 1, wherein the plane surface is symmetrical about a plane containing the cross section (Y).

4. The reflector according to claim 1, wherein the plane surface is asymmetric about a plane containing the cross section (Y).

5. The reflector according to claim 1, wherein the depth (d) of each reflective concave part varies in a range of 0.1 to 3 µm, and the pitch between adjacent concave parts is in a range of 2 to 50µm.

6. The reflector according to claim 1, wherein the reflector has a non-Gaussian reflectance angular distribution (1) that has one maximum in a direction and is asymmetric with respect to this direction, wherein this direction forms an angle with respect to the normal (H) to the flat planar base material (61) smaller than the reflection angle of a light beam incident on a specular reflector at the same angle.

7. The reflector according to claim 6, wherein a profile of a graph illustrating the angular reflectance distribution of the reflector is stepped, and the maximum value of the reflectance is at the top part of the stepped profile.

8. The reflector according to claim 1, wherein the thickness of the base material or the metal film of the reflector ranges from 8 to 20 nm.

9. A reflective liquid crystal display device comprising a liquid crystal cell (35b) constituted of a first (10) and a second (20) substrate facing each other and sandwiching a liquid crystal layer (30), the liquid crystal cell further comprising a transparent electrode (15) and an alignment layer (16) sequentially disposed on the side of the first substrate (10) facing the liquid crystal (30) and a second electrode (25) and an alignment layer (26) sequentially disposed on the side of the second substrate (20) facing the liquid crystal (30), wherein the liquid crystal cell further comprises a reflector according to claim 1 disposed between said first, respectively second substrate and said first, respectively second electrode or disposed on the side of one of said substrates opposite the side facing the liquid crystal layer.

## Patentansprüche

1. Reflektor, aufweisend ein flaches, planares Basismaterial (61), eine Mehrzahl reflektierender konkaver Teile (163), die an einer Oberfläche des flachen planaren Basismaterials (61) oder an einem an dem Basismaterial ausgebildeten Metallfilm ausgebildet sind, wobei
jeder reflektierende konkave Teil aus einer ersten peripher gekrümmten Oberfläche (164a), die eine zweite Oberfläche (164b) umgibt und mit dieser verbunden ist, gebildet ist,
jeder konkave Teil einen tiefsten Punkt (D) hat;
und wobei ein Querschnitt (Y), der durch den tiefsten Punkt (D) verläuft, aus einer ersten Kurve (J), die sich von einem peripheren Teil (S1) des konkaven Teils zu dessen tiefstem Punkt (D) erstreckt, gebildet ist,
**dadurch gekennzeichnet, dass**:
in jedem konkaven Teil (163) die erste Oberfläche (164a) asphärisch ist und die zweite Oberfläche (164b) planar ist und wobei der Querschnitt (Y) ferner eine zweite Kurve (K), die sich von dem tiefsten Punkt (D) des konkaven Teils zu einem Extremum eines ersten geraden Liniensegments (L) erstreckt, aufweist, wobei sich das erste gerade Liniensegment (L) zu einer dritten Kurve (M) erstreckt und die dritte Kurve (M) sich von dem anderen Extremum des geraden Liniensegments (L) zu einem anderen peripheren Teil (S2) des konkaven Teils erstreckt,
und wobei ein Krümmungsradius (R₂) der zweiten Kurve (K) größer ist als ein Krümmungsradius (R₁) der ersten Kurve (J), und der Krümmungsradius (R₂) der zweiten Kurve (K) gleich einen Krümmungsradius (R₃) der dritten Kurve (M) ist.

2. Reflektor nach Anspruch 1, wobei die zweite ebene Oberfläche eine rechteckige oder bogenförmige Kontur hat.

3. Reflektor nach Anspruch 1, wobei die ebene Oberfläche symmetrisch um eine Ebene, die den Querschnitt (Y) enthält, ist.

4. Reflektor nach Anspruch 1, wobei die ebene Oberfläche asymmetrisch um eine Ebene, die den Querschnitt (Y) enthält, ist.

5. Reflektor nach Anspruch 1, wobei die Tiefe (d) jedes reflektierenden konkaven Teils in einem Bereich von 0,1 bis 3 µm variiert und der Zwischenabstand zwischen benachbarten konkaven Teilen im Bereich von 2 bis 50 µm ist.

6. Reflektor nach Anspruch 1, wobei der Reflektor eine nicht-Gauß'sche-Reflektivitätswinkelverteilung (1) hat, die ein Maximum in einer Richtung hat und asymmetrisch in Bezug auf diese Richtung ist, wobei diese Richtung einen Winkel in Bezug auf die Normale (H) zu dem ebenen planaren Basismaterial bildet, der kleiner ist als der Reflexionswinkel eines bei dem gleichen Winkel auf einen spiegelnden Reflektor einfallenden Lichtstrahls.

7. Reflektor nach Anspruch 6, wobei ein Profil eines Graphen, der die winkelmäßige Reflektivitätsverteilung des Reflektors veranschaulicht, gestuft ist und der Maximalwert der Reflektivität an dem oberen Teil des gestuften Profils ist.

8. Reflektor nach Anspruch 1, wobei die Dicke des Basismaterials oder des Metallfilms des Reflektors im Bereich von 8 bis 20 nm liegt.

9. Reflektierende Flüssigkristallanzeigevorrichtung, aufweisend eine Flüssigkristallzelle 35b, die aus einem ersten (10) und einem zweiten (20) Substrat gebildet ist, die einander gegenüber liegen und eine Flüssigkristallschicht (30) sandwichartig umgeben, wobei die Flüssigkristallzelle ferner eine transparente Elektrode (15) und eine Ausrichtungsschicht (16), die an der Seite des ersten Substrats (10), die zu dem Flüssigkristall (30) gerichtet ist, sequentiell angeordnet sind und eine zweite Elektrode (25) und eine Ausrichtungsschicht (26), die an der Seite des zweiten Substrats (20), die zu dem Flüssigkristall (30) gerichtet ist, sequentiell angeordnet sind, aufweist, wobei die Flüssigkristallzelle ferner einen Reflektor gemäß Anspruch 1 aufweist, der zwischen dem ersten bzw. zweiten Substrat und der ersten bzw. zweiten Elektrode angeordnet ist oder an der Seite eines der Substrate entgegengesetzt der Seite, die zu der Flüssigkristallschicht gerichtet ist, angeordnet ist.

## Revendications

1. Réflecteur comprenant un matériau de base plan et plat (61), une pluralité de parties concaves réfléchissantes (163) formées sur une surface du matériau de base plan et plat (61) ou un film de métal formé sur ledit matériau de base, dans lequel
chaque partie concave réfléchissante est formée d'une première surface incurvée périphérique (164a) entourant une seconde surface (164b) et reliée à celle-ci,
chaque partie concave présente un point le plus profond (D),
et dans lequel une section transversale (Y) passant par ledit point le plus profond (D) est formée d'une première courbe (J) s'étendant depuis une partie périphérique (S1) de la partie concave jusqu'au point le plus profond (D)de celle-ci, **caractérisé en ce que** : dans chaque partie concave (163), la première surface (164a) est asphérique et la seconde surface (164b) est plane, et dans lequel la section transversale (Y) comprend en outre une seconde courbe (K) s'étendant depuis le point le plus profond (D) de la partie concave jusqu'à une extrémité d'un premier segment de droite (L), ledit premier segment de droite (L) s'étendant jusqu'à une troisième courbe (M), et ladite troisième courbe (M) s'étend depuis l'autre extrémité du segment de droite (L) jusqu'à une autre partie périphérique (S2) de la partie concave,
et dans lequel le rayon de courbure (R₂) de la seconde courbe (K) est plus grand que le rayon de courbure (R₁) de la première courbe (J), et le rayon de courbure (R₂) de la seconde courbe (K) est égal au rayon de courbure (R₃) de la troisième courbe (M).

2. Réflecteur selon la revendication 1, dans lequel la seconde surface plane présente un contour rectangulaire ou arqué.

3. Réflecteur selon la revendication 1, dans lequel la surface plane est symétrique par rapport à un plan contenant la section transversale (Y).

4. Réflecteur selon la revendication 1, dans lequel la surface plane est asymétrique par rapport à un plan contenant la section transversale (Y).

5. Réflecteur selon la revendication 1, dans lequel la profondeur (d) de chaque partie concave réfléchissante varie dans une plage de 0,1 à 3 µm, et l'espacement entre parties concaves adjacentes est dans une plage de 2 à 50 µm.

6. Réflecteur selon la revendication 1, dans lequel le réflecteur présente une distribution angulaire de réflectance non gaussienne (1) qui présente un maximum dans une direction et est asymétrique par rapport à cette direction, dans lequel ladite direction forme un angle par rapport à la normale (H) au matériau de base plan et plat qui est plus petit que l'angle de réflexion d'un faisceau de lumière incident sur un réflecteur spéculaire au même angle.

7. Réflecteur selon la revendication 6, dans lequel le profil de la courbe illustrant la distribution de réflectance angulaire du réflecteur est en escalier, et la valeur maximum de la réflectance se situe à la partie supérieure du profil en escalier.

8. Réflecteur selon la revendication 1, dans lequel l'épaisseur du matériau de base ou du film métallique dudit réflecteur va de 8 à 20 nm.

9. Dispositif d'affichage à cristaux liquides réfléchissants, comprenant une cellule de cristaux liquides (35b) constituée d'un premier (10) et d'un second (20) substrats se faisant face et prenant en sandwich une couche de cristaux liquides (30), ladite cellule de cristaux liquides comprenant en outre une électrode transparente (15) et une couche d'alignement (16) disposées séquentiellement sur le côté du premier substrat (10) faisant face aux cristaux liquides (30), et une seconde électrode (25) et une couche d'alignement (26) disposées séquentiellement sur le côté du second substrat (20) faisant face aux cristaux liquides (30), dans lequel la cellule de cristaux liquides comprend en outre un réflecteur selon la revendication 1, disposé entre ledit premier, respectivement, ledit second substrat et ladite première, respectivement ladite seconde électrode, ou disposé sur le côté de l'un desdits substrats à l'opposé du côté faisant face à la couche de cristaux liquides.
